# FASCICULE DE BREVET EUROPEEN

(11) **EP 2 808 575 B1**
(45) Date de publication et mention de la délivrance du brevet: **02.03.2016**
(21) Numéro de dépôt: 14166428.4
(22) Date de dépôt: 29.04.2014
(51) Int. Cl.: F16D 1/08, B62D 1/16

(54) **Assemblage sécurisé d'une mâchoire de cardan sur un arbre**
Gesicherter Zusammenbau einer Gelenkgabel auf einer Welle
Secured assembly of a cardan fork on a shaft

(30) Priorité: 29.05.2013 FR 1354892
(43) Date de publication de la demande: 03.12.2014
(73) Titulaire: Robert Bosch Automotive Steering Vendôme, 41100 Vendome (FR)
(72) Inventeur: Janvier, Arnaud, 41370 SAINT LEONARD EN BEAUCE (FR); Dubouilh, Gilles, 47180 CASTELNAU SUR GUPIE (FR); Gouge, Frédie, 41100 SAINTE ANNE (FR)
(74) Mandataire: Novagraaf Technologies

(56) Documents cités:
- FR-A1- 2 861 041
- US-A- 3 923 409
- US-A- 5 580 180
- US-A1- 2013 017 892

## Description

La présente invention se rapporte à un dispositif de fixation sécurisé de deux pièces par vissage et en particulier celles des colonnes de direction. Les colonnes de direction comprennent les composants compris entre le volant et les roues, soit dans l'ordre : le volant, la colonne de direction, l'axe intermédiaire, la crémaillère et enfin les roues. La fixation qui nous intéresse est celle de l'axe intermédiaire entre l'arbre de la colonne de direction et l'arbre de la crémaillère. L'axe intermédiaire est constitué, de deux cardans reliés entre eux par un arbre, chaque cardan étant constitué de deux mâchoires équipées de deux flans, une étant liée à l'arbre et l'autre pouvant accepter différentes formes qui sont complémentaires soit de l'arbre de la colonne de direction soit de l'arbre de la crémaillère et qui accueillera la vis d'assemblage.

De tels cardans sont montrés, par exemple, dans la demande de brevet US2013/0017892.

Il existe de nombreux dispositifs pour sécuriser les connexions vissées.

Le premier principe est l'utilisation d'une pièce supplémentaire pour éviter l'assemblage de la vis tant que l'arbre et la mâchoire ne sont pas parfaitement alignés.

Le second principe est l'utilisation de vis spéciale permettant l'assemblage une fois que les deux pièces sont parfaitement alignées.

Et enfin le troisième principe intègre un lamage dans les flans afin d'éviter de transmettre le couple par déformation du flan quand l'arbre est partiellement engagé mais toujours dans l'axe de la colonne ou l'axe de l'arbre de la crémaillère.

Les dispositifs existants ne sécurisent pas tous les cas de mauvaises connexions entre deux pièces.

Pour toutes ces liaisons vissées, la sécurisation de la connexion axiale du système se fait à l'aide d'une rainure, d'une gorge ou d'une forme appropriée sur l'arbre de la colonne de direction ou de l'arbre de la crémaillère dans laquelle vient se positionner la vis lors d'un bon montage et ainsi évite tout échappement axial en cas de serrage insuffisant de la vis.

Lorsque l'axe de l'arbre de la colonne ou l'arbre de la crémaillère et le flan ne sont pas en vis-à-vis ou lorsque l'une des pièces n'est pas parfaitement engagée, il se peut que l'on puisse monter la vis manuellement. Dans le cas où le pas du filet de la vis est proche du pas des cannelures de l'arbre on peut avoir un «faux vissage » de la vis alors que l'on pense que la vis a atteint l'autre orifice du flan.

On utilise souvent l'outil d'aide à l'assemblage des vis pour garantir le bon vissage de la vis en mesurant l'angle et le couple de vissage et en le comparant avec les valeurs de consigne. Cela est particulièrement vrai dans le cas de connexions de sécurité soumises à des contraintes de fatigues sévères et répétées. Dans le cas de conceptions partiellement sécurisées, comme décrites précédemment, on peut avoir un vissage sous couple avec déformation et/ou usinage du flan et/ou de l'arbre pouvant donner l'illusion que la connexion s'est bien réalisée car l'outil de vissage mesure des valeurs proches de celles qu'il aurait mesurées dans le cas d'une connexion correctement réalisée.

On a alors l'illusion d'un bon vissage alors que les deux pièces ne sont pas bien positionnées, ce qui peut entrainer des casses ou des accidents.

L'objet de la présente invention est de proposer une fixation à la fois simple et sécurisée.

Le dispositif de fixation selon l'invention comprend une mâchoire, une vis avec un diamètre d et un arbre, la mâchoire ayant deux flans parallèles entourant une partie de l'arbre, l'arbre présentant un évidement, qui peut être périphérique, au droit de la vis en position assemblée et chacune des flans ayant un orifice traversé par la vis, il est caractérisé en ce qu'un des orifices est de forme oblongue. La forme oblongue de l'orifice permet d'éviter que la vis ne se « coince » entre l'arbre et l'orifice quand l'arbre est mal positionné, en libérant la vis dès que celle-ci entre en contact avec une autre pièce ou un obstacle et ainsi permet d'éviter la transmission d'un couple entre les deux pièces à solidariser. Le couple préconisé pour l'assemblage ne sera jamais atteint ce qui permettra d'alerter lors du cycle d'assemblage de la mauvaise mise en place de le flan par rapport à l'autre pièce. La vis sera introduite du coté de l'orifice oblong.

Selon une première variante, chaque orifice ayant un centre, les deux centres sont alignés. L'introduction de la vis est ainsi plus aisée.

Selon une deuxième variante, chaque orifice ayant un centre, les deux centres sont décalés. Le décalage facilite le glissement de la vis sur l'arbre.

Selon une disposition particulière de la deuxième variante, le centre de l'oblong est plus bas que le centre de l'autre orifice. Le décalage est de préférence de telle sorte que l'axe de l'orifice oblong soit plus bas que l'orifice circulaire, ce qui permet de limiter voire de ne pas nécessiter d'augmentation de la hauteur des flans de la mâchoire.

Selon un mode de réalisation, l'arbre présente des dentures longitudinales coopérant avec des dentures disposées à l'intérieur des flans. L'arbre et l'intérieur des flans sont cannelées ce qui assure une anti-rotation de l'arbre entre les flans.

Selon un autre mode de réalisation, l'arbre présente un profil complémentaire avec l'intérieur des flans. Ainsi l'arbre peut présenter des pans coupés, une section polygonale, les flans auront alors un profil au moins partiellement complémentaire à celui de l'arbre afin d'assurer une anti-rotation.

Selon une disposition particulière, un flan se termine par une extrémité avec un évidement. Cet évidement est disposé dans le plan des deux axes des orifices et il va faciliter le glissement de la vis sur l'arbre lors que celui-ci est mal positionné.

Selon une disposition préférée, l'évidement est disposé sur l'extrémité du flan en vis-à-vis de l'orifice oblong. L'extrémité de la vis pourra ainsi plus facilement s'échapper vers le haut du flan située en face de l'orifice oblong.

Selon une disposition particulière, l'évidement a une largeur supérieure au diamètre d de la vis. L'évidement doit faciliter le glissement de la vis vers un bord du flan et sa largeur doit permettre de laisser passer toute la largeur de ladite vis. Cet évidement pourra indifféremment avoir une forme arrondie, ovale ou carrée.

Selon une autre disposition, au moins un flan se termine par une extrémité chanfreinée. Le chanfrein est disposé du coté intérieur du flan et permet de diriger la tête de la vis vers un bord du flan, le chanfrein a donc une pente orientée vers l'intérieur de l'mâchoire. On considèrera dans toute la description que le haut est situé du coté des bords des flans constituant l'ouverture de la mâchoire et le bas le coté opposé à ladite ouverture.

Selon une caractéristique particulière, la distance entre le haut de l'arbre et le haut de l'oblong est supérieure au diamètre d de la vis. Ceci permet à la vis de passer au dessus de l'arbre plus facilement.

Selon une autre caractéristique, l'oblong a une hauteur supérieure au diamètre de la vis. Il pourra par exemple être supérieur ou égal à deux fois sa largeur. La hauteur du oblong va dépendre de la largeur de la mâchoire plus on est large moins le oblong a besoin d'être haut et vis versa, moins la mâchoire est large plus la hauteur du oblong doit être haut, et l'épaisseur de la tôle a aussi un impact. L'orifice oblong peut également être réalisé par une pièce complémentaire.

D'autres avantages pourront encore apparaître à l'homme du métier à la lecture des exemples ci-dessous, illustrés par les figures annexées, donnés à titre d'exemple.
- La figure 1 est une vue en perspective d'un dispositif de fixation selon l'invention correctement monté,
- La figure 2 est une coupe transversale du dispositif de la figure 1,
- La figure 3 est une vue en coupe de a mâchoire avec l'arbre sans la vis,
- La figure 4 est une vue de coté de la mâchoire,
- La figure 5 est une vue en perspective de la mâchoire avec la pièce rapportée,
- La figure 6 est une vue en perspective du dispositif avec un arbre partiellement engagé dans la mâchoire et une vis mal disposée,
- La figure 7 est une coupe de la figure 6,
- La figure 8 est une perspective du dispositif avec l'arbre partiellement engagé et la une vis dans une autre position,
- La figure 9 est une coupe de la figure 8,

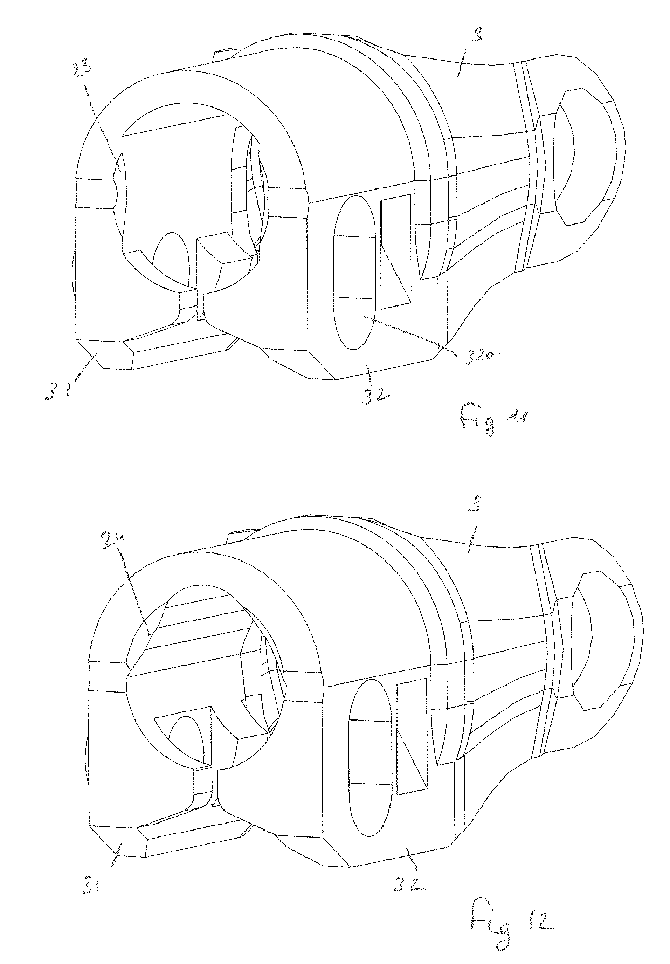

- Les figures 10, 11, 12 et 13 sont des vues de la mâchoire du coté de l'arbre selon différents modes de réalisation,
- Les figures 14, 15 et 16 sont des vues de la mâchoire du coté des flans selon différents modes de réalisation.

On appellera extérieur ce qui est situé sur l'extérieur de la mâchoire et intérieur ce qui est placé à l'intérieur de la mâchoire.

Dans toute la description les mêmes pièces porterons les mêmes références.

Le dispositif de fixation 1 comprend un arbre 2, une mâchoire 3 et une vis 4. L'arbre 2 a un axe X₂.

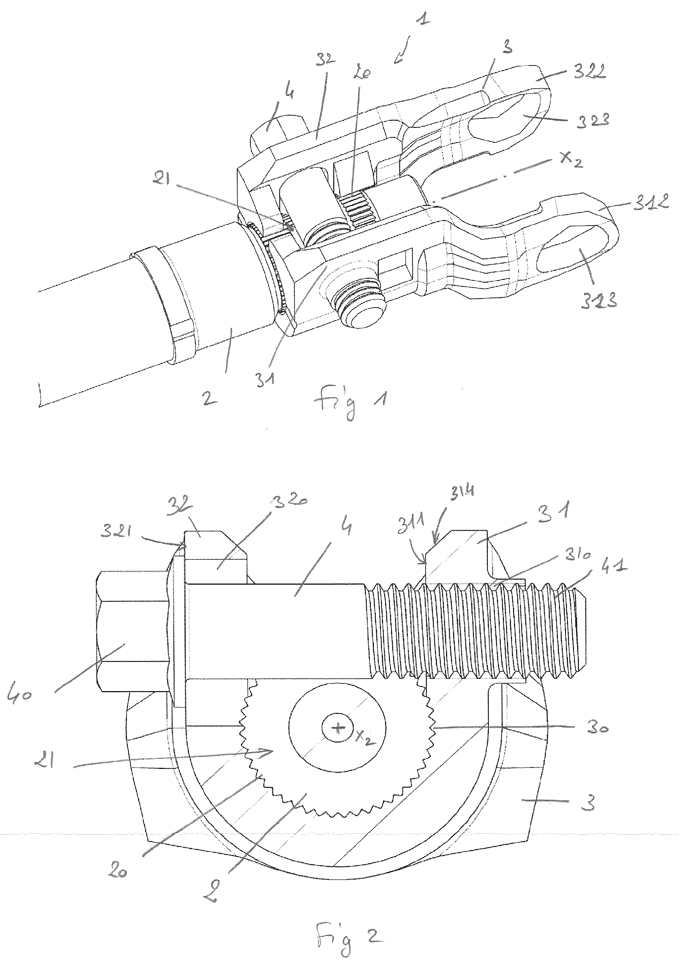

L'arbre 2 illustré aux figures 1 et 2 présente des cannelures 20 sur toute sa périphérie dans une partie de la zone destinée à être placée dans la mâchoire 3. Ces cannelures 20 coopèrent avec des cannelures 30 placées à l'intérieur de la mâchoire 3. La mâchoire 3 comprend deux flans 31 et 32 qui sont chacun percé d'un orifice 310 et 320. La vis 4 traverse chacun des orifices 310 et 320 et comprend une tête 40 qui vient en butée contre le bord extérieur 321 du flan 32 autour de l'orifice 320. L'intérieur de l'orifice 310 est taraudé pour permettre, lorsque l'on tourne la vis 4 de serrer et ainsi rapprocher les flans jusqu'à ce qu'ils exercent une pression sur l'arbre et ainsi assurer son immobilisation par rapport à la mâchoire. L'arbre 2 présente un évidement périphérique 21 au droit de la vis 4 pour assurer une fixation axiale dudit arbre 2 dans la mâchoire 3.

Les flans 32 et 33 se prolongent par des bras 312 et 322, chacun de ces bras sont chacun percés d'un trou 313 et 323 qui coopèrent avec un autre élément de la colonne de direction (non représentée).

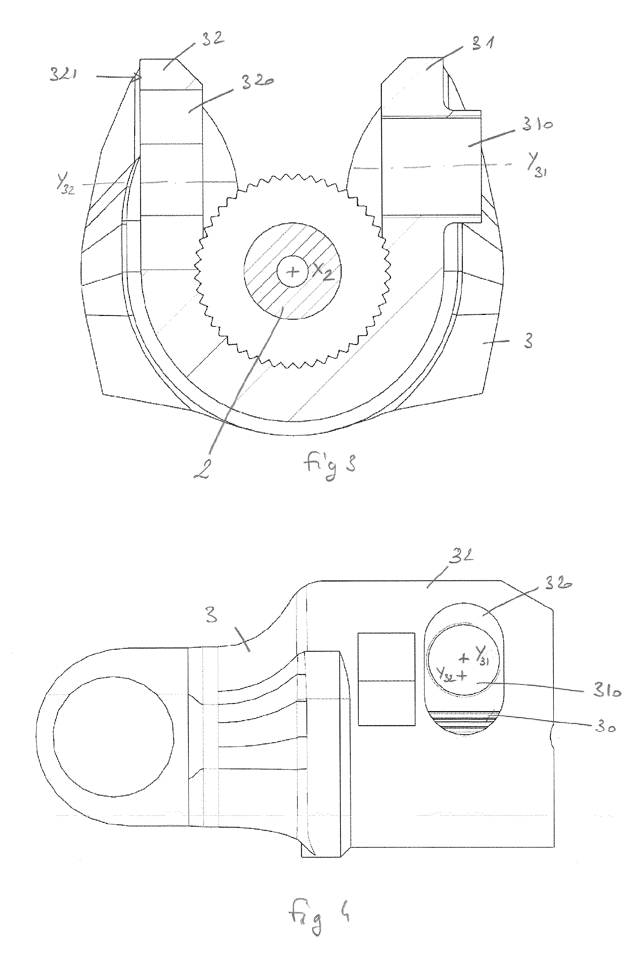

Dans la vue de la figure 4, l'axe Y₃₁ de l'orifice 310 est décalé vers le haut de la figure par rapport à l'axe Y₃₂ de l'orifice 320.

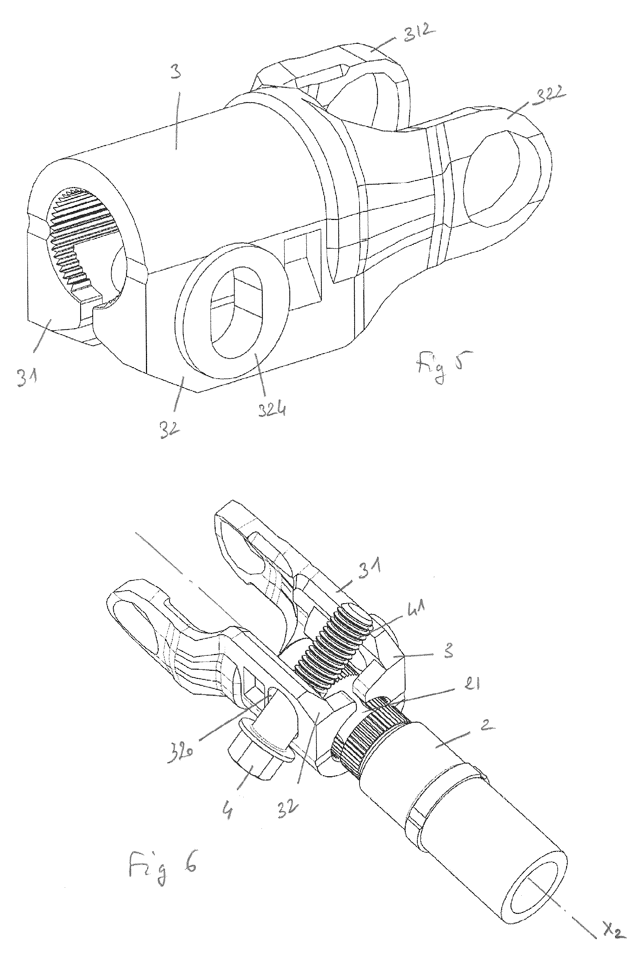

L'orifice du flan 32 de la figure 5 est constitué par une pièce rapportée 324 avec une forme oblongue.

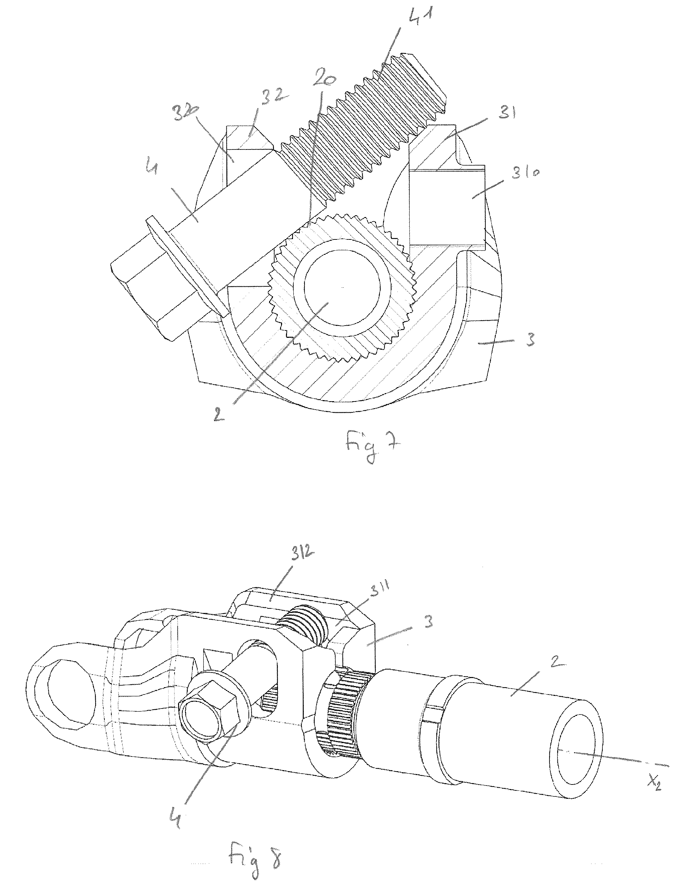

Nous allons maintenant décrire un exemple de ce qui se passe lorsque l'arbre est insuffisamment introduit à partir des figures 6 et 7.

Quand l'arbre 2 n'est pas bien positionné, l'évidement 21 au lieu d'être placé en vis-à-vis des orifices 310 et 320 est décalé d'un coté ou de l'autre, la vis 4 est introduite dans l'orifice 320 mais ne peut pas rester dans le prolongement des deux orifices 310 et 320, c'est-à-dire perpendiculaire au bord extérieur 321 du flan 32. La vis 4 va alors s'incliner en appui sur l'arbre 2, ici sur les cannelures 20, et comme l'orifice 320 est oblong l'extrémité de la vis 4 va glisser sur l'arbre 4 jusqu'à sortir de la mâchoire 3 au dessus du flan 31. La partie filetée 41 de la vis n'a plus de point d'appui et si on essaie d'appliquer un couple à la vis 4 celle-ci va tourner dans le vide, et on verra que la connexion n'est pas réalisée. Il n'existe donc pas de risque de laisser passer une pièce mal montée. Pour faciliter le glissement de la vis 4 sur le flan 31, on peut prévoir une partie chanfreinée 314 à l'extrémité de ledit flan 31. Cette partie chanfreinée 314 est placée à l'intérieur du e flan 31 dans le prolongement de la paroi interne 311.

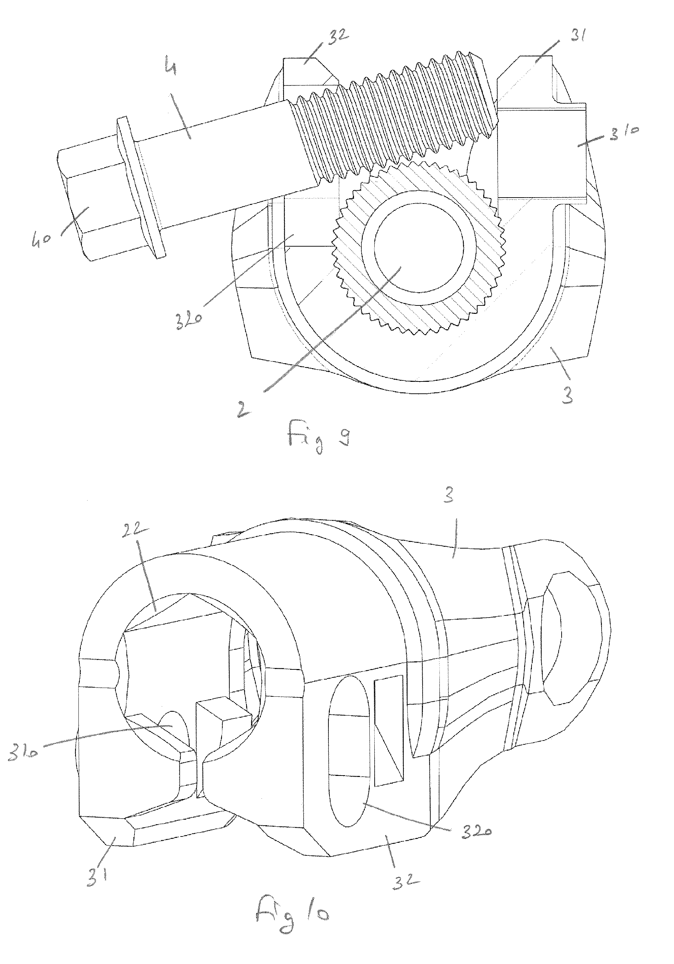

Dans l'exemple illustré figures 8 et 9, l'arbre 2 est également mal positionné et la vis 4 glisse également sur les cannelures 20 de l'arbre 2 et arrive en butée sur la paroi interne 311 du flan 310. Dans ce cas, la tête 40 de la vis 4 va se soulever dans l'orifice oblong 320, et ladite vis 4 tournera dans le vide et ne pourra pas prendre de couple de serrage, et on verra que la connexion est là non plus pas réalisée.

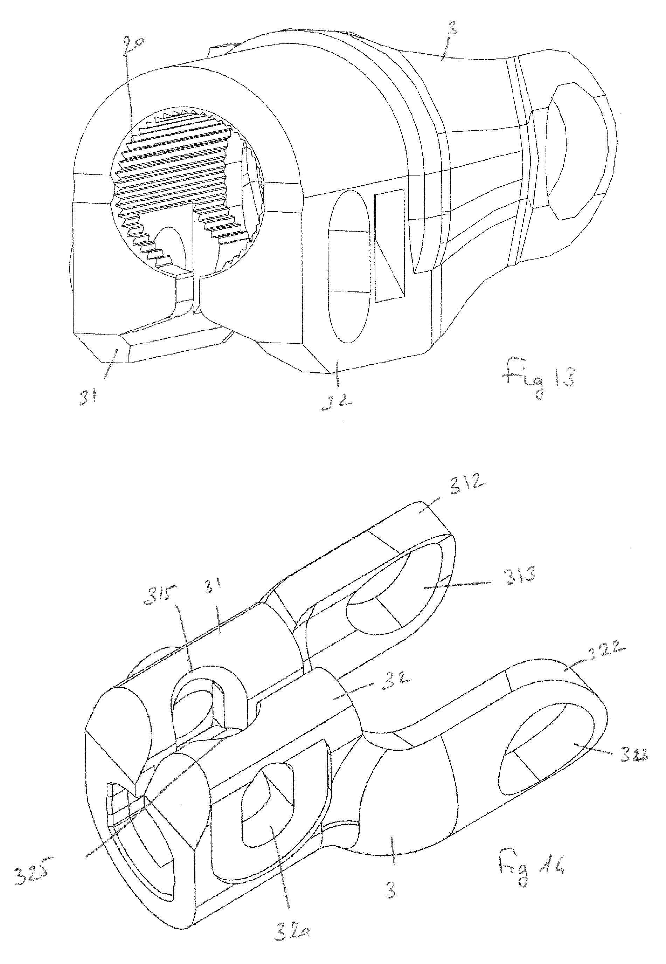

Un évidement 315 et 325 est disposé à l'extrémité de chaque flan 31, 32 de la figure 14. L'évidement 315 disposé en face de l'orifice oblong 320 facilite la sortie de la vis 4 de la mâchoire 3 quand cette vis 4 est mal positionnée. Les évidements 315 et 325 sont ici de forme arrondie en vue de dessus.

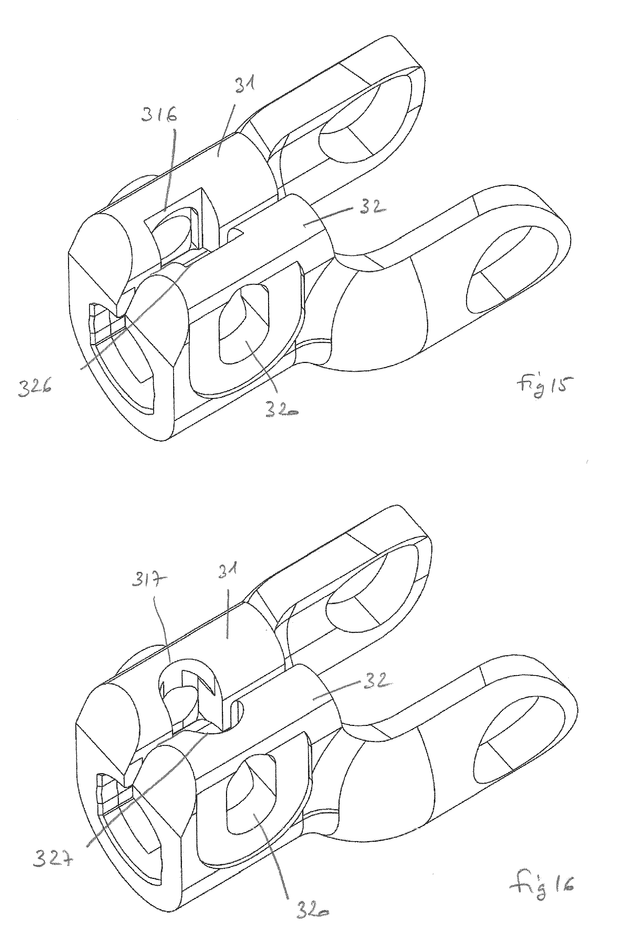

Dans la figure 15, les évidements 316 et 326 sont de forme carrée tandis que sur la figure 16, les évidements 317 et 327 sont de forme ovale.

Ces évidements 315, 325, 316, 326, 317 et 327 sont de préférence de dimension supérieure au diamètre de la vis 4.

## Revendications

1. Dispositif de fixation (1) comprenant une mâchoire (3), une vis (4) avec un diamètre d et un arbre (2), la mâchoire (3) ayant deux flans (31, 32) parallèles entourant une partie de l'arbre (2), l'arbre (2) présentant un évidement (21) au droit de la vis (4) en position assemblée et chacun des flans (31, 32) ayant un orifice (310, 320) traversé par la vis (4), **caractérisé en ce qu'**un des orifices (320) est de forme oblongue.

2. Dispositif de fixation (1) selon la revendication 1 **caractérisé en ce que** chaque orifice (310, 320) ayant un centre (Y₃₁, Y₃₂), les deux centres (Y₃₁, Y₃₂) sont alignés.

3. Dispositif de fixation (1) selon la revendication 1 **caractérisé en ce que** chaque orifice (310, 320) ayant un centre (Y₃₁, Y₃₂), les deux centres (Y₃₁, Y₃₂) sont décalés.

4. Dispositif de fixation (1) selon la revendication précédente **caractérisé en ce que** le centre (Y₃₂) de l'orifice (320) oblong est plus bas que le centre (Y₃₁) de l'autre orifice (31).

5. Dispositif de fixation (1) selon une des revendications précédentes **caractérisé en ce que** l'arbre (2) présente des dentures (20) longitudinales coopérant avec des dentures (30) disposées à l'intérieur des flans (31, 32).

6. Dispositif de fixation (1) selon une des revendications 1 à 4 **caractérisé en ce que** l'arbre (2) présente un profil complémentaire avec l'intérieur des flans (31, 32).

7. Dispositif de fixation (1) selon une des revendications précédentes **caractérisé en ce qu'**au moins un flan (31, 32) se termine par une extrémité avec un évidement (315, 325, 316, 326, 317, 327).

8. Dispositif de fixation (1) selon la revendication précédente **caractérisé en ce que** l'évidement (315, 316, 317) est disposé sur l'extrémité du flan (31) en vis-à-vis de l'orifice (320) oblong.

9. Dispositif de fixation (1) selon la revendication précédente **caractérisé en ce que** l'évidement (315, 325, 316, 326, 317, 327) a une largeur supérieure au diamètre d de la vis (4).

10. Dispositif de fixation (1) selon une des revendications précédentes **caractérisé en ce qu'**au moins un flan (31, 32) se termine par une extrémité chanfreinée (314).

11. Dispositif de fixation (1) selon une des revendications précédentes **caractérisé en ce que** la distance entre le haut de l'arbre (2) et le haut de l'orifice (320) oblong est supérieur au diamètre d de la vis (4).

12. Dispositif de fixation (1) selon une des revendications précédentes **caractérisé en ce que** l'orifice (320) oblong a une hauteur supérieure au diamètre de la vis.

## Patentansprüche

1. Befestigungsvorrichtung (1), die eine Backe (3), eine Schraube (4) mit einem Durchmesser d und eine Welle (2) umfasst, wobei die Backe (3) zwei parallele Flanken (31, 32) hat, die einen Teil der Welle (2) umgeben, wobei die Welle (2) in zusammengefügter Position eine Aussparung (21) im rechten Winkel zu der Schraube (4) aufweist und jede der Flanken (31, 32) eine Öffnung (310, 320) hat, die von der Schraube (4) durchquert wird, **dadurch gekennzeichnet, dass** eine der Öffnungen (320) eine längliche Form hat.

2. Befestigungsvorrichtung (1) nach Anspruch 1, **dadurch gekennzeichnet, dass** jede Öffnung (310, 320) eine Mitte (Y₃₁, Y₃₂) hat, wobei die zwei Mitten (Y₃₁, Y₃₂) gefluchtet sind.

3. Befestigungsvorrichtung (1) nach Anspruch 1, **dadurch gekennzeichnet, dass** jede Öffnung (310, 320) eine Mitte (Y₃₁, Y₃₂) hat, wobei die zwei Mitten (Y₃₁, Y₃₂) versetzt sind.

4. Befestigungsvorrichtung (1) nach dem vorhergehenden Anspruch, **dadurch gekennzeichnet, dass** die Mitte (Y₃₂) der länglichen Öffnung (320) niedriger ist als die Mitte (Y₃₁) der anderen Öffnung (31).

5. Befestigungsvorrichtung (1) nach einem der vorhergehenden Ansprüche, **dadurch gekennzeichnet, dass** die Welle (2) Längsverzahnungen (20) aufweist, die mit Verzahnungen (30) zusammenwirken, die im Inneren der Flanken (31, 32) angeordnet sind.

6. Befestigungsvorrichtung (1) nach einem der Ansprüche 1 bis 4, **dadurch gekennzeichnet, dass** die Welle (2) ein Profil aufweist, das zu dem Inneren der Flanken (31, 32) komplementär ist.

7. Befestigungsvorrichtung (1) nach einem der vorhergehenden Ansprüche, **dadurch gekennzeichnet, dass** mindestens eine Flanke (31, 32) in einem Ende mit einer Aussparung (315, 325, 316, 326, 317, 327) endet.

8. Befestigungsvorrichtung (1) nach dem vorhergehenden Anspruch, **dadurch gekennzeichnet, dass** die Aussparung (315, 316, 317) auf dem Ende der Flanke (31) gegenüber der länglichen Öffnung (320) angeordnet ist.

9. Befestigungsvorrichtung (1) nach dem vorhergehenden Anspruch, **dadurch gekennzeichnet, dass** die Aussparung (315, 325, 316, 326, 317, 327) eine Breite hat, die größer ist als der Durchmesser d der Schraube (4).

10. Befestigungsvorrichtung (1) nach einem der vorhergehenden Ansprüche, **dadurch gekennzeichnet, dass** mindestens eine Flanke (31, 32) in einem abgefasten Ende (314) endet.

11. Befestigungsvorrichtung (1) nach einem der vorhergehenden Ansprüche, **dadurch gekennzeichnet, dass** die Entfernung zwischen der Oberseite der Welle (2) und der Oberseite der länglichen Öffnung (320) größer ist als der Durchmesser d der Schraube (4).

12. Befestigungsvorrichtung (1) nach einem der vorhergehenden Ansprüche, **dadurch gekennzeichnet, dass** die längliche Öffnung (320) eine Höhe hat, die größer ist als der Durchmesser der Schraube.

## Claims

1. Device for fastening (1) comprising a jaw (3), a screw (4) with a diameter d and a shaft (2), the jaw (3) having two parallel flanks (31, 32) surrounding a portion of the shaft (2), the shaft (2) having a recess (21) in line with the screw (4) in assembled position and with each of the flanks (31, 32) having an orifice (310, 320) that the screw (4) passes through, **characterised in that** one of the orifices (320) is of oblong shape.

2. Device for fastening (1) according to claim 1 **characterised in that** as each orifice (310, 320) has a centre (Y₃₁, Y₃₂), the two centres (Y₃₁, Y₃₂) are aligned.

3. Device for fastening (1) according to claim 1 **characterised in that** as each orifice (310, 320) has a centre (Y₃₁, Y₃₂), the two centres (Y₃₁, Y₃₂) are offset.

4. Device for fastening (1) as claimed in the preceding claim **characterised in that** the centre (Y₃₂) of the oblong orifice (320) is lower than the centre (Y₃₁) of the other orifice (31).

5. Device for fastening (1) according to one of the preceding claims **characterised in that** the shaft (2) has longitudinal toothings (20) cooperating with toothings (30) arranged inside the flanks (31, 32).

6. Device for fastening (1) according to one of the claims 1 to 4 **characterised in that** the shaft (2) has a profile that is complementary with the inside of the flanks (31, 32).

7. Device for fastening (1) according to one of the preceding claims **characterised in that** at least one flank (31, 32) is terminated by an end with a recess (315, 325, 316, 326, 317, 327).

8. Device for fastening (1) as claimed in the preceding claim **characterised in that** the recess (315, 316, 317) is arranged on the end of the flank (31) facing the oblong orifice (320).

9. Device for fastening (1) as claimed in the preceding claim **characterised in that** the recess (315, 325, 316, 326, 317, 327) has a width greater than the diameter d of the screw (4).

10. Device for fastening (1) according to one of the preceding claims **characterised in that** at least one flank (31, 32) is terminated by a chamfered end (314).

11. Device for fastening (1) according to one of the preceding claims **characterised in that** the distance between the top of the shaft (2) and the top of the oblong orifice (320) is greater than the diameter d of the screw (4).

12. Device for fastening (1) according to one of the preceding claims **characterised in that** the oblong orifice (320) has a height greater than the diameter of the screw.
